Europäisches Patentamt

European Patent Office

Office européen des brevets

(19)

(11) **EP 1 291 331 A2**

(12) **EUROPÄISCHE PATENTANMELDUNG**

(43) Veröffentlichungstag:
   **12.03.2003   Patentblatt 2003/11**

(51) Int Cl.7: **C03C 17/36**

(21) Anmeldenummer: **02020107.5**

(22) Anmeldetag: **07.09.2002**

(84) Benannte Vertragsstaaten:
   **AT BE BG CH CY CZ DE DK EE ES FI FR GB GR
   IE IT LI LU MC NL PT SE SK TR**
   Benannte Erstreckungsstaaten:
   **AL LT LV MK RO SI**

(30) Priorität: **10.09.2001   DE 10144413**

(71) Anmelder: **Fraunhofer-Gesellschaft zur
   Förderung der angewandten Forschung e.V.
   80636 München (DE)**

(72) Erfinder:
   • **Vergöhl, Michael
     38162 Destedt (DE)**

• **Rickers, Christoph, Dipl.-Phys.
   38106 Braunschweig (DE)**
• **Hunsche, Berno, Dipl.-Phys.
   38106 Braunschweig (DE)**
• **Klages, Claus-Peter Dipl.-Chem.
   38102 Braunschweig (DE)**

(74) Vertreter: **Einsel, Martin
   Patentanwälte,
   Einsel & Kollegen,
   Jasperalle 1a
   38102 Braunschweig (DE)**

(54) **Beschichtung mit photoinduzierter Hydrophilie**

(57)   Eine Beschichtung mit selbstreinigender Wirkung weist ein Schichtsystem aus mindestens drei Schichten auf. Eine obere photokatalytisch aktive Schicht (2) aus Titandioxid ist vorgesehen. Das Schichtsystem ist antireflektierend. Bevorzugt ist die obere Schicht (2) Titandioxid in der Anatas-Modifikation, die Antireflexbeschichtung auf einem transparenten Substrat (1) vorgesehen und das transparente Substrat (1) Glas. Die Antireflexbeschichtung kann eine metallische Zwischenschicht (4) aufweisen

Luft

| | |
|---|---|
| 33.77 nm | 2 |
| 2.00 nm | 5 |
| 12.88 nm | 4 |
| 36.12 nm | 3 |
| 1 mm | 1 |

Luft

**Fig. 2**

**Beschreibung**

Die vorliegende Erfindung betrifft eine Beschichtung aus einem Schichtsystem zur Entspiegelung von insbesondere transparenten Substraten, die zugleich selbstreinigend wirkt. Auch zum Wärmeschutz ist diese Beschichtung geeignet.

In jüngster Zeit haben selbstreinigende Oberflächen auf Basis von hydrophilen, Wasser anziehenden Beschichtungen an Bedeutung gewonnen. Für selbstreinigende Oberflächen wird üblicherweise Titandioxid $TiO_2$ eingesetzt, das eine photokatalytische Aktivität aufweist. Die photokatalytische Aktivität führt dazu, dass bei Bestrahlung mit Licht geeigneter Wellenlänge eine Oberfläche aus Titandioxid hydrophil, dass heißt Wasser anziehend, wird. Daraus resultiert eine selbstreinigende Wirkung unter Wassereinfluss. Dieser Effekt der photoinduzierten hydrophilen Wirkung wurde bereits in Nature "Light - induced amphilic surfaces" Band 388 (1997), Seite 431 beschrieben. Unter Bestrahlung von Licht mit einer Photonenenergie, die größer ist als die Bandlücke von Titandioxid, wird deren Oberfläche Wasser anziehend, so dass sich ein glatter Wasserfilm ausbildet. Dieser Effekt kann ausgenutzt werden, um selbstreinigende Oberflächen zu erzeugen.

Die Bandlücke von Titandioxid beträgt ca. 3,4 eV entsprechend einer Wellenlänge von 340 nm, so dass die selbstreinigende Wirkung üblicherweise durch Bestrahlung mit UV-Licht induziert werden kann.

Derartige selbstreinigende Oberflächen lassen sich durch das Aufbringen von dünnen Titandioxid-Schichten auf die gewünschten Substrate realisieren. Die Aufbringung kann mit an sich bekannten Beschichtungsverfahren erfolgen. Beispiele hierfür sind Vakuum-Beschichtungsverfahren, wie das reaktive oder nicht reaktive Magnetron-Sputtern, thermisches oder elektronenstrahl-unterstütztes Aufdampfen, oder auch das plasmaunterstützte Aufdampfen.

Zur Realisierung einer hydrophilen Oberfläche muss Titandioxid als oberste Schicht aufgebracht werden, da anderenfalls ein direkter Kontakt mit Wasser und damit die selbstreinigende Wirkung unter Wassereinfluss nicht gewährleistet werden kann.

Von Nachteil ist jedoch, dass Titandioxid einen hohen Brechungsindex aufweist, wodurch eine hohe Reflexion bewirkt wird. Werden zum Beispiel transparente Substrate wie zum Beispiel Glasoberflächen mit einer derartigen Titandioxidschicht beschichtet weist das erhaltene beschichtete Glassubstrat eine deutlich höhere Reflexion auf, als die reine Glasoberfläche. Aufgrund dieser hohen Reflexion sind wasserabweisende Schichten auf Basis von Titandioxid für viele Anwendungen nicht geeignet, insbesondere für Anwendungen auf transparenten Substraten wie Glas oder Kunststoff wie sie für Brillen oder Architekturglas eingesetzt werden.

Klassische Entspiegelungssysteme basieren darauf, dass ein Material mit einem kleineren Brechungsindex mit einer Schichtdicke, bei der Interferenzeffekte minimal sind, auf ein Material mit einem höheren Brechungsindex aufgebracht wird. So kann eine Glasoberfläche mit einem Brechungsindex von n = 1,5 mit einer Schicht mit einem Brechungsindex von 1,22 entspiegelt werden (s. zum Beispiel McLeod, "Thin-film optical filters" Institute of Physics Publishing, London 2001).

Im allgemeinen Fall wird ein Material mit einem Brechungsindex n durch eine Schicht mit einem Brechungsindex $n_{Schicht}$ mit $n_{Schicht} = \sqrt{n}$ und einer Dicke $d = \lambda_0/4n_{Schicht}$ mit $\lambda_0$ = Zentralwellenlänge der Entspiegelung, gegen Luft (n = 1) entspiegelt. Naturgemäß ist hierbei die Entspiegelung auf die Zentralwellenlänge $\lambda_0$ beschränkt und damit nur schmalbandig.

Für praktische Anwendungen sind jedoch breitbandige Entspiegelungssysteme wünschenswert.

Gemäß den vorstehenden Gleichungen könnte eine Verbreiterung der Bandbreite der Entspiegelung durch Materialien mit einem möglichst kleinen Brechungsindex erzielt werden.

Die klassischen Beschichtungsverfahren erlauben jedoch keine geeignete Herstellung von dünnen Schichten mit einem Brechungsindex von kleiner als ca. 1,46 (Siliciumdioxid, $SiO_2$) bzw. 1,35 (Magnesiumdifluorid, $MgF_2$). Materialien mit kleinerem Brechungsindex sind technisch nur schwer realisierbar und wenn überhaupt mit nur ungenügenden Schichteigenschaften.

Um eine breitbandige Entspiegelung zu erzielen wird üblicherweise ein Mehrschichtsystem verwendet. Ein klassisches Breitband-Entspiegelungssystem für Glas ist ein System gemäß Gleichung 1:

Gleichung 1:

Glas - $TiO_2$ (11nm) - $SiO_2$ (40nm) - $TiO_2$ (110nm) - $SiO_2$ (85nm) - Luft.

Mit einem derartigen mehrschichtigen Entspiegelungssystem lässt sich eine Reflexion von weniger als 0,5 % im sichtbaren Spektralbereich erzielen.

Da Glas typischerweise einen Brechungsindex in einem Bereich von 1,4 bis 1,6 (je nach Glasart) aufweist, ist Titandioxid mit einem relativ hohen Brechungsindex von n = 2,4 bis 2,7 bei 550 nm, je nach Herstellungsbedingungen, als Entspiegelungsschicht für Materialien wie Glas ungeeignet, da wie vorstehend ausgeführt, für die Erzielung einer Entspiegelung der Brechungsindex der Entspiegelungsschicht kleiner als der Brechungsindex des zu entspiegelnden Substrats sein muss. Gemäß

$$R = \frac{(n_{TiO2}-1)^2}{(n_{TiO2}+1)^2}$$

ergibt sich für $TiO_2$ gegen Luft (n = 1) eine Reflexion von deutlich mehr als 10 %.

Andererseits ist es zur Ausnutzung der hydrophilen Eigenschaften von Titandioxid erforderlich, dass die Titandioxidschicht die oberste Schicht bildet.

Eine Möglichkeit zur Lösung dieses Problems könnte darin liegen, auf die Titandioxidschicht eine poröse Schicht mit niedrigeren Brechungsindex aufzubringen. Durch die Porosität dieser Schicht mit niedrigerem Brechungsindex wird der ausreichende Zutritt von Wasser zur Titandioxidschicht gewährleistet. Von Nachteil ist hierbei jedoch, dass derartige poröse Schichten eine nur ungenügende mechanische Stabilität aufweisen.

Es war Aufgabe der vorliegenden Erfindung, eine Antireflexbeschichtung für insbesondere transparente Substrate mit photoinduzierter Hydrophilie zur Verfügung zu stellen, die eine selbstreinigende Oberfläche und zugleich geringe Reflexion aufweist.

Gelöst wird diese Aufgabe durch eine Antireflexbeschichtung mit selbstreinigender Wirkung, wobei die Antireflexbeschichtung ein Schichtsystem aus mindestens drei Schichten aufweist und die obere, photokatalytisch aktive Schicht Titandioxid ist.

Erfindungsgemäß wird somit eine Antireflexbeschichtung zur Verfügung gestellt, das aus einem Schichtsystem mit photoinduzierter Hydrophilie besteht.

Die Antireflexbeschichtung weist als obere Schicht eine Titandioxidschicht auf, die durch Lichteinstrahlung geeigneter Wellenlänge Wasser anziehend und damit hydrophil wird. Durch diese photoinduzierte Hydrophilie wirkt die Titandioxidschicht als selbstreinigende Oberfläche.

Weiter weist die erfindungsgemäße Antireflexbeschichtung zusätzlich zu der obersten Titandioxidschicht mindestens zwei weitere Schichten auf. Diese weiteren Schichten dienen zur Neutralisation bzw. Verringerung der durch die obere Titandioxidschicht verursachten hohen Reflexion.

Mit der erfindungsgemäßen Antireflexbeschichtung können transparente Substrate wie Glas mit einer selbstreinigenden Oberfläche versehen werden, ohne dass eine Beeinträchtigung der Reflexion in Kauf genommen werden muss.

So eignet sich die erfindungsgemäße Antireflexbeschichtung mit photoinduzierter Hydrophilie zur Beschichtung von optischen Gläsern wie Brillen und für den Architekturglasbereich wie zum Beispiel für Fenster.

Prinzipiell eignet sich die vorliegende Erfindung zur Beschichtung von transparenten Substraten aus beliebigen Materialien wie Gläser oder transparenten Kunststoffen.

Der Brechungsindex von Glas oder Kunststoff variiert je nach Art und Herstellungsverfahren. Typischerweise weist Glas einen Brechungsindex in einem Bereich von etwa 1,4 bis 1,6 und Kunststoff von etwa 1,5 bis 1,7 auf.

Bei den erfindungsgemäß eingesetzten Schichten handelt es sich um dünne Schichten mit einer Schichtdicke im Nanometerbereich, die für Licht durchlässig sind und damit die Transparenz des darunter liegenden Substrats nicht beeinträchtigen.

Es wurde auch beobachtet, dass durch die erfindungsgemäße Antireflexbeschichtung die Emissivität der Substrate verringert werden kann. Damit eignet sich die vorliegende Erfindung auch für Niedrig-Energie-Anwendungen. Darüber hinaus lässt sich auch die Sonneneinstrahlung im nahen Infrarot reduzieren, so dass auch eine kombinierte Sonnen- und Wärmeschutzbeschichtung ("sun control") realisiert werden kann.

Es zeigen

**Figur 1**    ein Diagramm des berechneten Y-Normfarbwerts einer $TiO_2$-Schicht auf Glas,

**Figur 2**    den Schichtaufbau einer erfindungsgemäßen Antireflexbeschichtung,

**Figur 3**    ein Diagramm der Reflexion und Transmission einer erfindungsgemäßen Ausführungsform für eine Antireflexbeschichtung gemäß Figur 2,

**Figur 4**    eine weitere Ausführungsform für eine erfindungsgemäße Antireflexbeschichtung,

**Figur 5**    ein Diagramm der Reflexion und Transmission der Antireflexbeschichtung gemäß Figur 4,

**Figur 6**    eine weitere Ausführungsform der erfindungsgemäßen Antireflexbeschichtung,

| Figur 7 | ein Diagramm mit der Reflexion und Transmission der Antireflexbeschichtung gemäß Figur 6, |

**Figur 7**  ein Diagramm mit der Reflexion und Transmission der Antireflexbeschichtung gemäß Figur 6,

**Figur 8**  ein Diagramm mit einem Vergleich der Reflexion von unterschiedlich dicken $TiO_2$-Schichten sowie einer erfindungsgemäßen Antireflexbeschichtung,

**Figur 9**  ein Diagramm der Reflexion einer weiteren Ausführungsform einer erfindungsgemäßen Antireflexbeschichtung,

**Figur 11**  ein Diagramm mit dem Reflexionsspektrum einer weiteren Ausführungsform der erfindungsgemäßen Antireflexbeschichtung,

**Figur 12**  den Schichtaufbau einer weiteren Ausführungsform für eine erfindungsgemäße Antireflexbeschichtung,

**Figur 13**  ein Diagramm mit dem Reflexionsspektrum der Antireflexbeschichtung gemäß Figur 12,

**Figur 14**  den Schichtaufbau einer weiteren Ausführungsform für eine erfindungsgemäße Antireflexbeschichtung, und

**Figur 15**  ein Diagramm des Reflexionsspektrums einer Antireflexbeschichtung gemäß Figur 14.

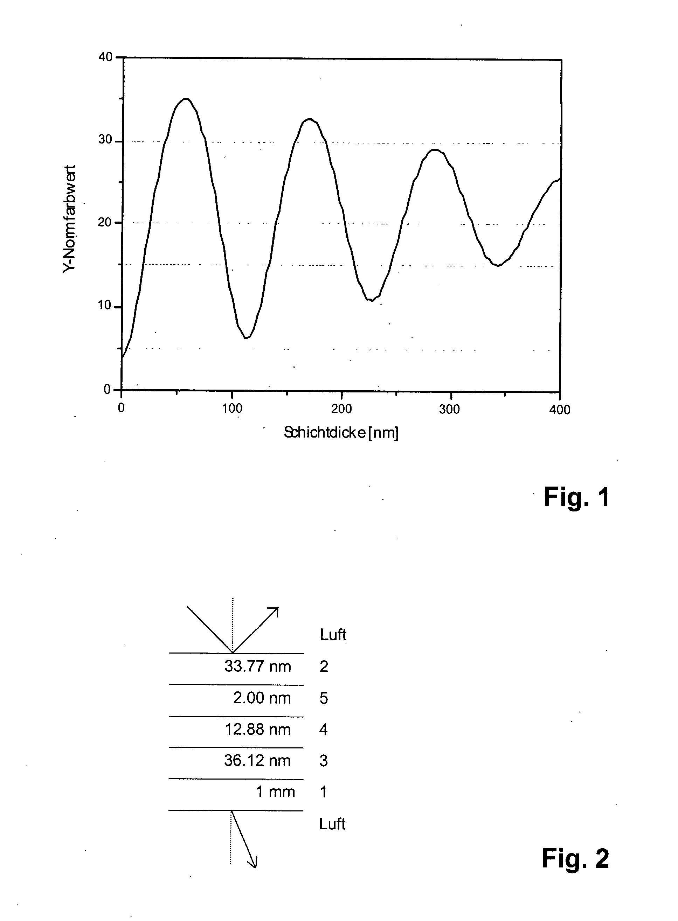

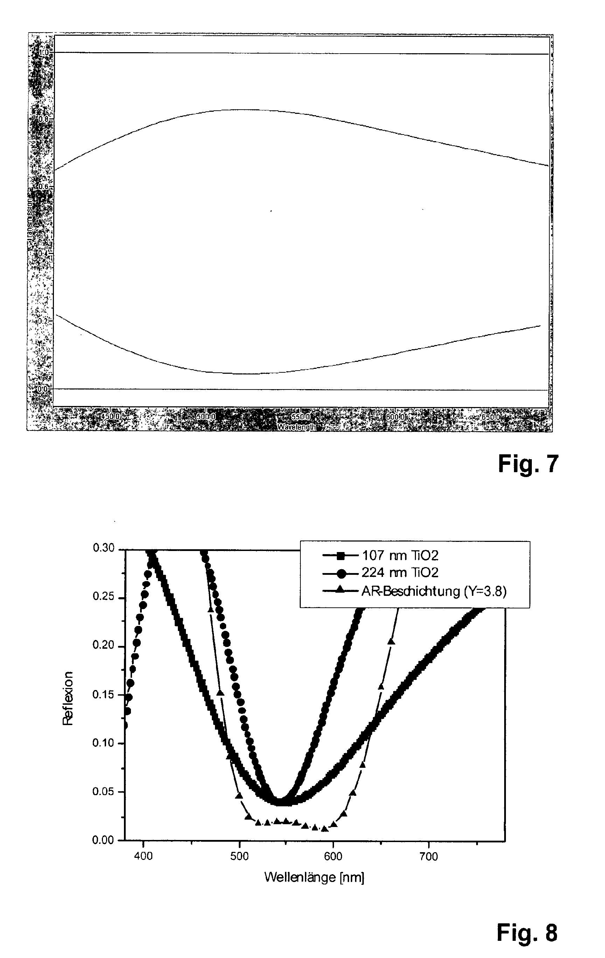

Der Y-Normfarbwert, Reflexion und Transmission in Figuren 1, 3, 8, 9, 10 und 11 wurden gemäß Nature "Light-induced amphiphilic surfaces", Band 388, (1997), Seite 431 erhalten. In Figur 8 bedeutet "AR" Antireflexbeschichtung.

Die oberste Schicht der erfindungsgemäßen selbstreinigenden Antireflexbeschichtung mit photoinduzierter Hydrophilie besteht aus $TiO_2$. $TiO_2$ kann je nach Herstellungsbedingungen einen Brechungsindex von n = 2,4 bis 2,7 bei 550 nm aufweisen.

Für die vorliegende Erfindung kann $TiO_2$ in seiner Anatas- oder Rutil-Modifikation eingesetzt werden.

Die Anatas-Modifikation ist aufgrund ihrer leichter zu induzierenden Hydrophilie und damit besseren selbstreinigenden Wirkung bevorzugt.

Wie bereits ausgeführt, liegt die Bandlücke von Titandioxid bei ca. 3,4 eV, was einer Wellenlänge von 340 nm entspricht. Damit lässt sich durch Bestrahlung mit UV-Licht die Hydrophilie induzieren.

Erfindungsgemäß kann das eingesetzte Titandioxid mit geeigneten Dotierungsmitteln dotiert sein. Durch die Dotierung lässt sich die Bandlücke und damit die erforderliche Photonenenergie zur Induzierung der Hydrophilie beeinflussen. Geeignete Dotierungsmittel sind zum Beispiel $Fe_2O_3$ oder $Nb_2O_3$.

Bisher wurde allgemein angenommen, dass für eine optimale selbstreinigende Wirkung die Titandioxidschicht eine Dicke von mindestens 100 bis 200 nm aufweisen sollte. Derart dicke Titandioxidschichten sind jedoch für bestimmte Anwendungen wie zum Beispiel für die Beschichtung von Brillen oder im Architekturbereich ungeeignet. Erfindungsgemäß wurde nun gefunden, dass sich auch mit dünneren Titandioxidschichten ausreichende Reinigungseffekte erzielen lassen.

So können zum Beispiel für Brillen erfindungsgemäße Antireflexbeschichtungssysteme mit einer Titandioxidschicht mit einer Dicke von 20 nm oder weniger und für Architekturgläser mit einer Dicke von 50 nm oder weniger, insbesondere von etwa 40 nm oder weniger, eingesetzt werden.

In **Figur 1** ist ein Diagramm gezeigt mit dem Reflexionsspektrum einer Titandioxidschicht auf Glas als Funktion der Titandioxidschichtdicke. Hierbei ist der Y-Normfarbwert, der ein Maß für die spektral gemittelte Reflexion der Oberfläche ist, als Funktion der Titandioxidschichtdicke berechnet. Man erkennt, dass der Y-Normfarbwert eine oszillatorische Funktion der Schichtdicke ist. Der Grund hierfür sind Interferenzeffekte, wie sie üblicherweise im Fall dünner transparenter Schichten auf Glas auftreten. Für eine reine Glasoberfläche ohne Titandioxidbeschichtung beträgt der minimale Wert für Y 4,2. Das zweite Minimum mit Y = 6,4 ergibt sich für eine Titandioxidschicht mit einer Dicke von 110 nm und weitere Minima mit Y = 10,9 für eine Titandioxidschichtdicke von 225 nm und Y = 15,2 für eine Titandioxidschichtdicke von 340 nm.

Erfindungsgemäß wird durch Kombination der Titandioxidschicht mit geeigneten weiteren Schichten die durch die Titandioxidschichten bewirkte erhöhte Reflexion eines damit beschichten Substrats neutralisiert bzw. reduziert.

In einer ersten Ausführungsform kann hierbei die Titandioxidschicht mit einer Oxidschicht mit einem hohen Brechungsindex und einer Metallschicht kombiniert werden. Die Oxidschicht mit hohem Brechungsindex bildet hierbei in der Beschichtung die unterste Schicht, d. h. die Schicht, die unmittelbar auf dem Substrat aufliegt. Die Metallschicht ist zwischen dieser unteren Oxidschicht mit einem hohen Brechungsindex und der oberen Titandioxidschicht, die photokatalytisch aktiv ist, angeordnet. Durch Verwendung der metallischen Zwischenschicht ist eine Entspiegelung der oberen hochbrechenden Titandioxidschicht möglich.

Für die untere Oxidschicht mit hohem Brechungsindex kann ein beliebiges Oxid eingesetzt werden mit einem Brechungsindex, der typischerweise in einem Bereich von 1,9 bis 2,5 oder darüber liegt. Für die untere Oxidschicht mit hohem Brechungsindex kann ebenfalls $TiO_2$ verwendet werden. Beispiele für weitere geeignete Materialien sind $SnO_2$, $ZnO$, $Si_3N_4$, $Bi_2O_3$, $ZrO_2$ und $Ta_2O_5$. Die untere Oxidschicht mit hohem Brechungsindex hat typischerweise eine Dicke in einem Bereich von 20 bis 50 nm, insbesondere 25 bis 40 nm. Bei Bedarf kann die Dicke auch niedriger oder höher sein.

Zwischen der unteren Oxidschicht mit einem hohen Brechungsindex und der oberen Titandioxidschicht befindet sich eine Zwischenschicht aus einem Metall. Durch Kombination mit dieser Zwischenschicht lässt sich die durch die obere Titandioxidschicht bewirkte erhöhte Reflexion neutralisieren oder erniedrigen. Beispiele für geeignete Metalle sind Silber, Gold oder Titan. Die Dicke der metallischen Zwischenschicht variiert in Abhängigkeit von dem eingesetzten Metall. Der untere und obere Grenzwert werden hierbei durch die zu erzielenden Eigenschaften bestimmt. Ist die Schicht zu dünn, wird keine ausreichende Entspiegelung der oberen Titandioxidschicht erhalten. Ist dagegen die Schicht zu dick, kann die Transmission des Lichts beeinträchtigt sein. Ein typischer Wertebereich für die metallische Zwischenschicht ist zwischen 5 nm bis 20 nm, insbesondere 8 nm und 20 nm. Beispielsweise haben sich für Ag Schichtdicken in einem Bereich von 8 nm bis 20 nm als besonders geeignet erwiesen.

Gemäß einer weiteren Ausführungsform enthält das erfindungsgemäße Beschichtungssystem aus oberer Titandioxidschicht mit metallischer Zwischenschicht und unterer Oxidschicht mit hohem Brechungsindex eine Blockerschicht. Diese Blockerschicht wird auf der metallischen Zwischenschicht aufgebracht und dient dazu, eine Oxidation der metallischen Zwischenschicht während der nachfolgenden Beschichtungsprozesse zum Beispiel zur Aufbringung der oberen Titandioxidschicht zu unterbinden. Beispiele für geeignete Materialien für die Blockerschicht sind unterstöchiometrisches TiOx und NiCr.
Die Dicke der Blockerschicht liegt typischerweise in einem Bereich von 1 nm bis 6 nm.

In **Figuren 2, 4 und 6** sind Beispiele für erfindungsgemäße Antireflexbeschichtungen mit einer metallischen Zwischenschicht gezeigt. Als Substrat wurde jeweils Glas verwendet.

Die Ausführungsform gemäß **Figur 2** besteht aus einem Glassubstrat (1) (1 mm), das mit einer erfindungsgemäßen Beschichtung beschichtet ist mit einer unteren Oxidschicht (3) aus $TiO_2$ in der Anatas-Modifikation (36,12 nm), einer metallischen Zwischenschicht (4) aus Ag (12,88 nm), einer Blockerschicht (5) aus einem unterstöchiometrischem NiCrOx (2,0 nm) und einer oberen Schicht (2) aus $TiO_2$ in der Anatas-Modifikation (33,77 nm).

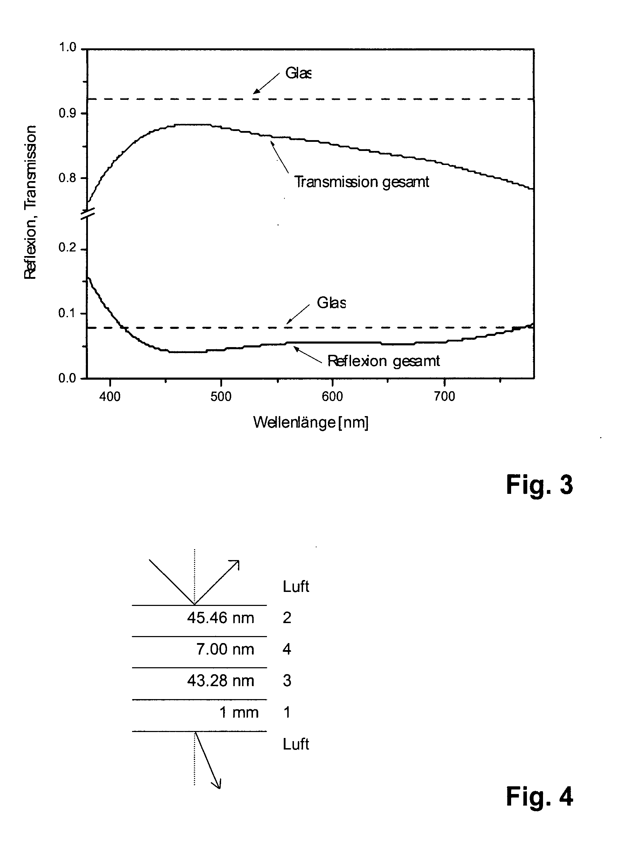

Das Reflexions- und Transmissionsspektrums des Schichtsystems gemäß Figur 2 ist in Figur 3 gezeigt. Zum Vergleich ist in Figur 3 die Reflexion bzw. Transmission von Glas gezeigt mit einem Absorptionsindex k = 0 und einem Brechungsindex n = 1,5 für beide Seiten. Aus Figur 3 ist ersichtlich, dass das Schichtsystem gemäß Figur 2 gute Antireflexeigenschaften aufweist. Es ist eine Transmission im sichtbaren Spektralbereich zwischen 85 und 95 % erreichbar, wobei die Absorptionsverluste im Bereich von 3 bis 10 % liegen. Aufgrund dieser geringen Absorption eignet sich ein solches Schichtsystem ausgezeichnet zur Entspiegelung von z. B. Brillen.

Darüber hinaus hat sich gezeigt, dass die Emissivität dieses Schichtsystems gering ist, so dass es auch als Niedrigenergiebeschichtung (low-e Beschichtung) geeignet ist, wie sie zum Beispiel für den Architekturglasbereich bevorzugt ist.

Gemäß einer weiteren Ausführungsform ist eine Wiederholung des Schichtaufbaus der Antireflexbeschichtung möglich, wodurch eine weitere Verbesserung der Niedrigenergie-Eigenschaften ("Doppel-low-e") oder auch ein kombinierter Sonnen- und Wärmeschutz ("sun control") bewirkt werden kann.

Die Emissivität der erfindungsgemäßen Beschichtung und damit der k-Wert eines Glasverbundes der erfindungsgemäßen Beschichtung lässt sich durch die Dicke und durch die elektrische Leitfähigkeit der metallischen Zwischenschicht beeinflussen. Beispielsweise lassen sich bei Verwendung von Silber bei Schichtdicken von 13 nm besonders kleine k-Werte (z. B. 1.1 in einer Doppelverglasung mit Ar-Füllung) erzielen.

In **Figur 4** ist ein weiteres Beispiel einer erfindungsgemäßen Antireflexbeschichtung mit metallischer Zwischenschicht (4) auf einem Glassubstrat (1) gezeigt. Hierbei ist auf dem Glassubstrat (1) (1 mm ) eine untere Oxidschicht mit einem Brechungsindex von 2,6 (3) (43,28 nm), eine metallische Zwischenschicht (4) aus Platin (7,00 nm) und eine obere Schicht (2) aus $TiO_2$ in der Anatas-Modifikation (45,46 nm) aufgebracht.
Die obere Titandioxidschicht (2) ist hierbei dicker gewählt als in dem Beispiel mit Silber als metallische Zwischenschicht (4), da durch die Verwendung von Platin als metallische Zwischenschicht das System einen anderen Brechungsindex aufweist.
Ein Brechungsindex von 2,6 für die untere Oxidschicht (3) lässt sich beispielsweise durch $TiO_2$ in Rutilmodifikation oder $Bi_2O_3$ realisieren.

Tabellierte Werte für Brechungsindices und Absorbtionsindices von Silber finden sich in Palik (E. D. Palik (ed), Handbook of Optical Constants of Solids, Bd. II, Academic Press, New York (1991)). und für Platin in E.D.Palik, Handbook of Optical Constants of Solids Band I, Academic Press, New York (1985), p. 275.

Die dort angegebenen Werte können als Grundlage zur Auswahl von geeigneten Schichtdicken für die metallische Zwischenschicht dienen.

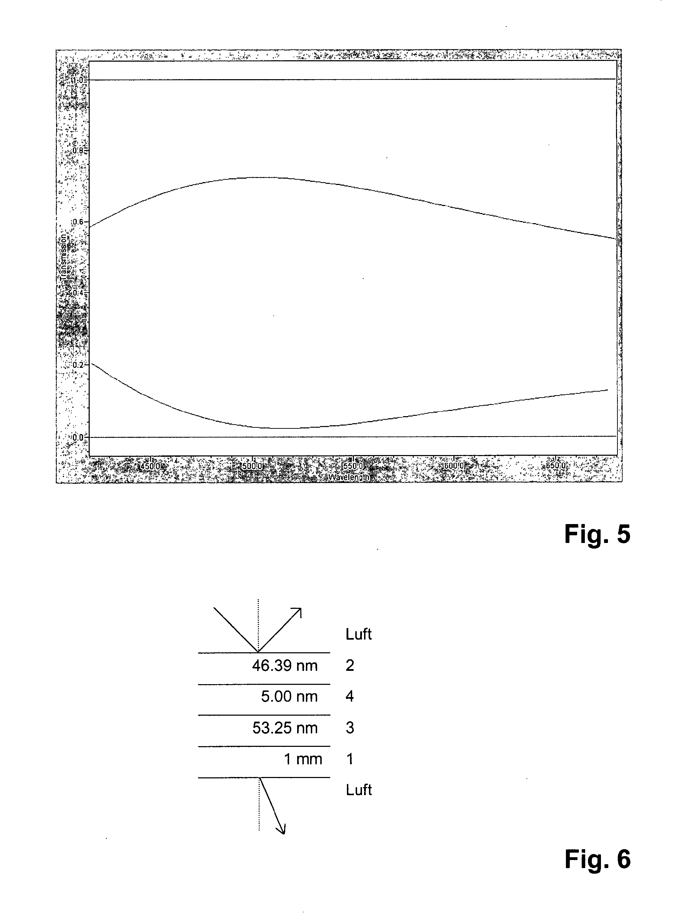

Das Reflexions- und Transmissionsspektrum der Ausführungsform gemäß Figur 4 ist in Figur 5 gezeigt.

Ein weiteres Beispiel für eine erfindungsgemäße Antireflexbeschichtung mit metallischer Zwischenschicht ist in Figur 6 gezeigt. Hierbei ist auf einem Glassubstrat (1) (4.000.000 nm) eine untere Oxidschicht (3) mit hohem Brechungsindex aus $TiO_2$ in der Anatas-Modifikation mit einem Brechungsindex von 2,45 (53,25 nm), eine metallische Zwischenschicht (4) aus Titan (5,00 nm) und eine obere Schicht (2) aus $TiO_2$, das ebenfalls in der Anatas-Modifikation vorliegt, aufgebracht.

Das Reflexions- und Transmissionsspektrum der Antireflexbeschichtung gemäß **Figur 6** ist in **Figur 7** gezeigt.

Gemäß einer weiteren Ausführungsform wird für die erfindungsgemäße Antireflexbeschichtung ein Multischichtsystem, bestehend aus verschiedenen dünnen, dielektrischen Schichten, zwischen der Substratoberfläche und der oberen Titandioxidschicht aufgebracht.

Der Brechungsindex und die Dicken der einzelnen Schichten werden hierbei im Hinblick auf eine Minimierung der Reflexion ausgewählt ohne jedoch die selbstreinigende photokatalytische Oberfläche zu beeinträchtigen.

Vorzugsweise besteht das Multischichtsystem aus einer Kombination, in der sich Schichten mit hohem Brechungsindex mit Schichten mit niedrigem Brechungsindex abwechseln.

Als Materialien für Schichten mit hohem Brechungsindex können die selben Materialien verwendet werden wie sie zum Beispiel vorstehend für die untere Oxidschicht mit hohem Brechungsindex angegeben sind. Bevorzugt werden für diese Ausführungsform für die Schichten mit hohem Brechungsindex Materialien gewählt, deren Brechungsindex 2,2 oder größer als 2,2 ist.

Als Schichten mit niedrigem Brechungsindex werden typischerweise Schichten ausgewählt, deren Brechungsindex kleiner als 2 und insbesondere < 1,7 ist. Beispiele hierfür sind $SiO_2$(n=1,46), $MgF_2$ (n=1,35) und $Al_2O_3$ (n=1,6-1,7) Das für Sputterbeschichtungen am besten geeignete Material ist $SiO_2$.

Nachstehend wird diese Ausführungsform einer erfindungsgemäßen Antireflexbeschichtung anhand einiger Beispiele erläutert.

Die Schichtdicke der oberen Titandioxidschicht wurde in den folgenden Beispielen bei etwa 100 nm eingestellt, wobei sich eine minimale Reflexion ergibt wie aus Figur 1 ersichtlich ist.

Das Multischichtsystem bestehend aus dünnen, dielektrischen Schichten kann Schichten mit gleichen oder unterschiedlichen Materialien, gleichen oder unterschiedlichen Schichtdicken und gleichem oder unterschiedlichem Brechungsindices enthalten.

Beispielsweise kann das Schichtsystem alternierend aus einer Schicht mit hohem Brechungsindex und einer Schicht mit niedrigem Brechungsindex aufgebaut sein, wobei für die Schichten mit hohem Brechungsindex beziehungsweise die Schichten mit niedrigem Brechungsindex jeweils das gleiche Material eingesetzt wird.

Der Schichtaufbau kann bezüglich Dicke, Material und Brechungsindex beliebig variieren sofern hierdurch eine Minimierung der Reflexion erzielt wird.

Ein erstes Beispiel für eine erfindungsgemäße Antireflexbeschichtung mit einem Multischichtsystem aus dielektrischen Schichten ist in Tabelle 1 gezeigt.

Tabelle 1

| # | Physikal. Dicke | Optische Dicke | QWOT | Material |
|---|---|---|---|---|
| 1 | 2.85 | 7.70 | 0.061617 | RUTIL |
| 2 | 39.35 | 57.45 | 0.459595 | LOW ($SiO_2$) |
| 3 | 100.59 | 271.61 | 2.172851 | RUTIL |
| 4 | 96.36 | 140.68 | 1.125441 | LOW ($SiO_2$) |
| 5 | 1.81 | 4.88 | 0.039041 | RUTIL |
| 6 | 107.76 | 269.39 | 2.155154 | $TiO_2$Oberfläche |

Hierbei bedeuten:

Optische Dicke: Schichtdicke x Brechungsindex

$QWOT = \lambda_0/4n_{Schicht}$

Die Schicht 1 ist die erste Schicht auf dem Substrat, die Schicht 6 die oberste Schicht des Stapels.

Bei diesem Beispiel gemäß Tabelle 1 handelt es sich um eine Antireflexbeschichtung mit einem Multischichtsystem aus abwechselnd hochbrechenden und niedrigbrechenden Materialien, wobei als hochbrechendes Material TiO2 in der Rutil-Modifikationund als niedrigbrechendes Material Siliziumdioxid eingesetzt wurde.

Schicht Nummer 6 ist die obere Schicht (2) aus Titandioxid, welche in der Anatas-Modifikation vorliegt.

In **Figur 8** ist ein Vergleich der Reflexionen einer 114 nm dicken und einer 224 nm dicken Titandioxidschicht auf Glas sowie der erfindungsgemäßen Antireflexbeschichtung gemäß Tabelle 1 ebenfalls auf einem Glassubstrat gezeigt.

Für die in Figur 8 gezeigte erfindungsgemäße Antireflexbeschichtung wurde ein Y-Normfarbwert von 3,8 berechnet. Aus Figur 8 ergibt sich, dass für die erfindungsgemäße Antireflexbeschichtung nicht nur eine Erniedrigung der Reflexion sondern zudem eine Verbreiterung des Wellenlängenbereichs der verringerten Reflexion erzielt werden kann im Vergleich zu Glas mit einer reinen Titandioxidbeschichtung. Zudem folgt aus Figur 8, dass sich der Wellenlängenbereich der minimalen Reflexion für mit Titandioxid beschichteten Glas mit zunehmender Dicke der Titandioxidschicht verringert.

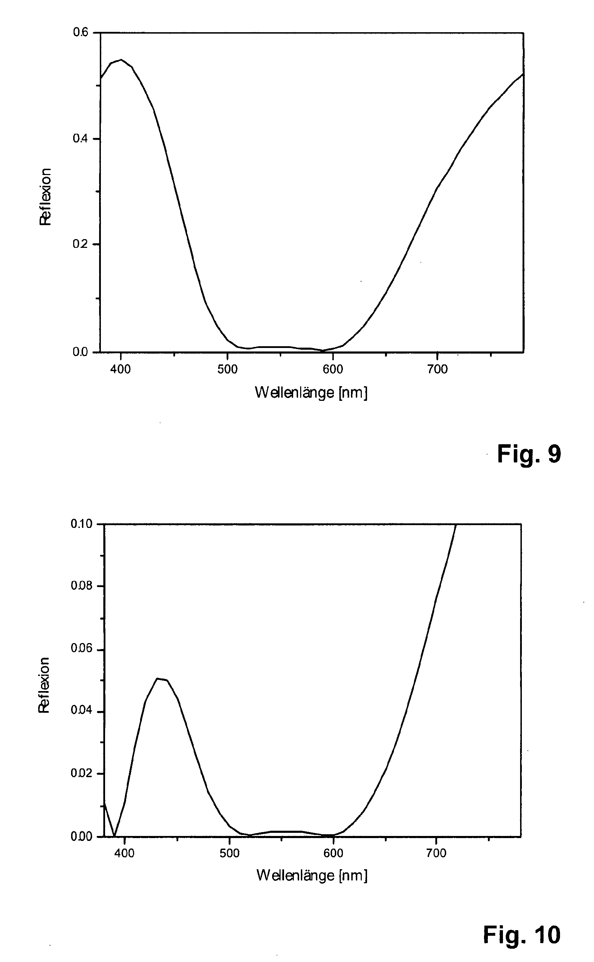

In **Figur 9** ist das Reflexionsspektrum für ein weiteres Beispiel einer erfindungsgemäßen Antireflexbeschichtung mit Multischichtsystem aus dielektrischen Schichten auf einem Glassubstrat gezeigt.

Die Antireflexbeschichtung zeigt folgende Zusammensetzung der Schichten ausgehend von dem Glassubstrat: $SiO_2$ (35 nm), $TiO_2$-Anatas (107 nm), $SiO_2$ (93 nm) und $TiO_2$-Anatas (114 nm) als obere selbstreinigende Schicht.

$SiO_2$ ist hier das niedrigbrechende und $TiO_2$ das hochbrechende Material.

Die Dicke der Antireflexbeschichtung beträgt 350 nm und die Gesamtdicke einschließlich Glassubstrat 550 nm. Mit dieser Antireflexbeschichtung konnte ein Y-Normfarbwert von 2,2 erzielt werden, der deutlich unter dem Y-Normfarbwert von Glas mit 4,5 gemäß Figur 1 liegt

Ein weiteres Beispiel für eine erfindungsgemäße Antireflexbeschichtung mit einem Multischichtsystem aus dielektrischen Materialien ist in Tabelle 2 dargestellt. In dem Beispiel gemäß Tabelle 2 ist die obere Schicht aus Titandioxid die Schicht Nummer 13.

Tabelle 2

| # | Physikal. Dicke | Optische Dicke | QWOT | Material |
|---|---|---|---|---|
| 1 | 16.90 | 42.25 | 0.338004 | $TiO_2$ Anatas |
| 2 | 28.61 | 41.77 | 0.334145 | LOW ($SiO_2$) |
| 3 | 20.00 | 50.00 | 0.400000 | $TiO_2$ Anatas |
| 4 | 6.00 | 8.76 | 0.070080 | LOW ($SiO_2$) |
| 5 | 20.00 | 50.00 | 0.400000 | $TiO_2$ Anatas |
| 6 | 8.00 | 11.68 | 0.093440 | LOW ($SiO_2$) |
| 7 | 20.00 | 50.00 | 0.400000 | $TiO_2$ Anatas |
| 8 | 10.00 | 14.60 | 0.116800 | LOW ($SiO_2$) |
| 9 | 20.00 | 50.00 | 0.400000 | $TiO_2$ Anatas |
| 10 | 12.00 | 17.52 | 0.140160 | LOW ($SiO_2$) |
| 11 | 97.11 | 242.77 | 1.942133 | $TiO_2$ Anatas |
| 12 | 50.00 | 73.00 | 0.584000 | LOW ($SiO_2$) |
| 13 | 8.98 | 22.46 | 0.179663 | $TiO_2$ Anatas |

In der Antireflexbeschichtung gemäß Tabelle 2 besteht das Multischichtsystem aus einer alternierenden Folge von hochbrechenden Titandioxidschichten in der Anatas-Modifikation (n=2,45) und niedrigbrechenden Siliziumdioxidschichten.

Die Gesamtdicke der Antireflexbeschichtung gemäß Tabelle 2 einschließlich Glassubstrat beträgt 317 nm, wobei ein Y-Normfarbwert von nur 0,37 gemessen wurde.

In **Figur 10** ist das Reflexionsspektrum der Antireflexbeschichtung gemäß Tabelle 2 gezeigt.

Der Aufbau eines weiteren Beispiels für eine erfindungsgemäße Antireflexbeschichtung mit Multischichtsystem aus dielektrischen Schichten ist in Tabelle 3 gezeigt.

Schicht Nr. 5 ist die obere Titandioxidschicht. Schicht Nr. 1 ist die unterste, dem Substrat benachbarte Schicht.

Tabelle 3

| # | Physikal. Dicke | Optische Dicke | QWOT | Material |
|---|---|---|---|---|
| 1 | 14.74 | 35.37 | 0.282976 | ANATAS |
| 2 | 29.08 | 42.45 | 0.339600 | LOW ($SiO_2$) |
| 3 | 80.45 | 193.08 | 1.544636 | ANATAS |
| 4 | 50.00 | 73.00 | 0.584000 | LOW ($SiO_2$) |
| 5 | 10.00 | 25.00 | 0.200000 | $TiO_2$ Oberfläche |

Die Antireflexbeschichtung gemäß Tabelle 2 enthält ein Multischichtsystem aus alternierend hochbrechenden und niedrigbrechenden Schichten aus Titandioxid in der Anatas-Modifikation beziehungsweise Siliziumdioxid. Die oberste Titandioxidschicht liegt in der Anatas-Modifikation vor.

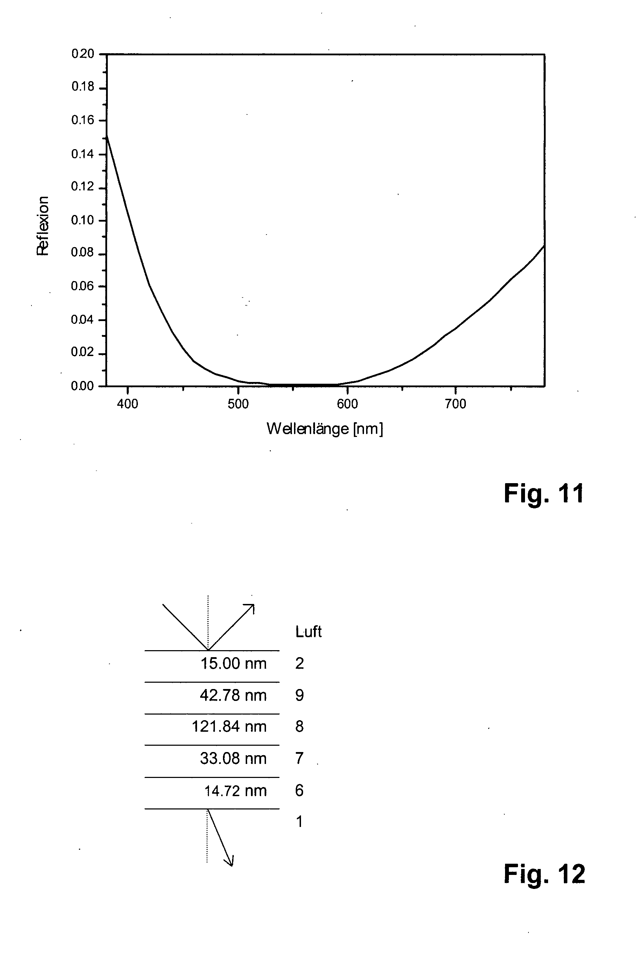

**Figur 11** zeigt das Reflexionsspektrum der Antireflexbeschichtung gemäß Tabelle 3 auf einem Glassubstrat mit einer Gesamtdicke (einschließlich Glassubstrat) von 180 nm und Y = 0,29.

Die erfindungsgemäße Antireflexbeschichtung mit einem Multischichtsystem aus dielektrischen Schichten ist nicht auf vergleichsweise dicke Titandioxidschichten als obere Schicht beschränkt wie in den Beispielen gemäß Tabellen 1 bis 3 eingesetzt. Ausgezeichnete Entspiegelung lässt sich auch mit einer derartigen Antireflexbeschichtung mit dünneren Titandioxidschichten als obere Schicht erzielen.

So kann gemäß einer weiteren Ausführungsform der erfindungsgemäßen Antireflexbeschichtung die obere Titandioxidschicht deutlich dünner hergestellt werden, beispielsweise in einer Dicke von 20 nm oder weniger.

Ein Beispiel für den Aufbau einer derartigen Antireflexbeschichtung ist in **Figur 12** gezeigt. Hierbei ist auf einem Glassubstrat ein Multischichtsystem aus dielektrischen Schichten mit abwechselnd hohen (Titandioxid in der Anatas-Modifikation) und niedrigem ($SiO_2$) Brechungsindex aufgebracht. Der Aufbau ist wie folgt: Glassubstat, Anatas (14,72 nm), $SiO_2$ (33,08 nm), Anatas (121,84 nm), $SiO_2$ (42,78 nm) und Anatas (15,00 nm) als obere Titandioxidschicht.

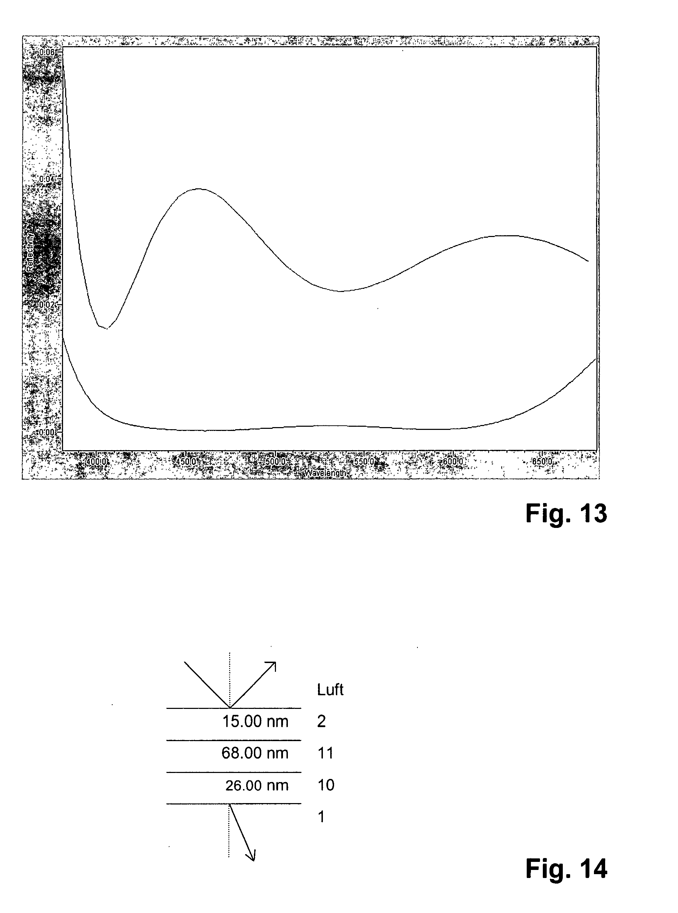

Das Reflexionsspektrum der in Figur 12 gezeigten Antireflexbeschichtung auf Glas ist in **Figur 13** als unterer Graph gezeigt. Der obere Graph ist das Reflexionsspektrum einer reinen Glasoberfläche. Aus Figur 13 folgt, dass durch die erfindungsgemäße Antireflexbeschichtung wie sie zum Beispiel in Figur 12 gezeigt ist, die Reflexion gegenüber einer reinen Glasoberfläche deutlich verringert werden kann. Die Reflexion ist nicht nur deutlich verringert, sondern wird auch über einen breiteren Wellenlängenbereich verringert.

In dem Beispiel gemäß Figur 12 ist die obere Siliziumdioxidschicht mit ca. 43 nm deutlich dünner gegenüber der oberen Siliziumdioxidschicht in einem klassischen Entspiegelungssystem gemäß der vorstehend gezeigten Gleichung 1 mit ca. 85 nm. Dennoch wird mit dem Aufbau gemäß Figur 12 eine gegenüber einer Glasoberfläche deutlich geringere Reflexion erzielt.

In der in Figur 12 gezeigten Antireflexbeschichtung kann die Dicke der einzelnen Schichten über einen weiten Bereich variieren. So kann die untere Anatas-Schicht eine Dicke zwischen 10 und 20 nm aufweisen. Die darüber liegende niedrigbrechende Schicht kann eine Dicke zwischen 20 und 50 nm aufweisen. Die darüber liegende Titandioxidschicht in der Anatas-Modifikation kann eine Dicke zwischen 80 und 200 nm aufweisen. Auch die Dicke der oberen Titandioxidschicht in Anatas-Modifikation kann variieren. Beispielsweise ist hier eine Dicke von bis zu 20 nm möglich, um eine Reduzierung der Reflexion zu erreichen.

Als niederbrechendes Material kann nicht nur $SiO_2$, sondern es können auch andere Materialien eingesetzt werden, wie zum Beispiel $MgF_2$, $Al_2O_3$, $Si_3N_4$ oder Mischungen davon.

Ein weiteres Beispiel für eine erfindungsgemäße Antireflexbeschichtung mit einem Multischichtsystem aus dielektrischen Schichten mit einer dünnen oberen Titandioxidschicht ist in **Figur 14** gezeigt. Die in Figur 14 gezeigte Antireflexbeschichtung ist aus drei Schichten zusammengesetzt. Die Antireflexbeschichtung ist auf ein Glassubstrat abgeschieden und besteht aus einer unteren, hochbrechenden Schicht aus Anatas (26,00 nm), einer niederbrechenden Schicht (68,00 nm) und einer oberen Titandioxidschicht in der Anatas-Modifikation (15,00 nm).

Auch hier kann die niederbrechende Schicht aus einem beliebigen niederbrechenden Material bestehen, vorzugsweise jedoch aus Siliziumdioxid.

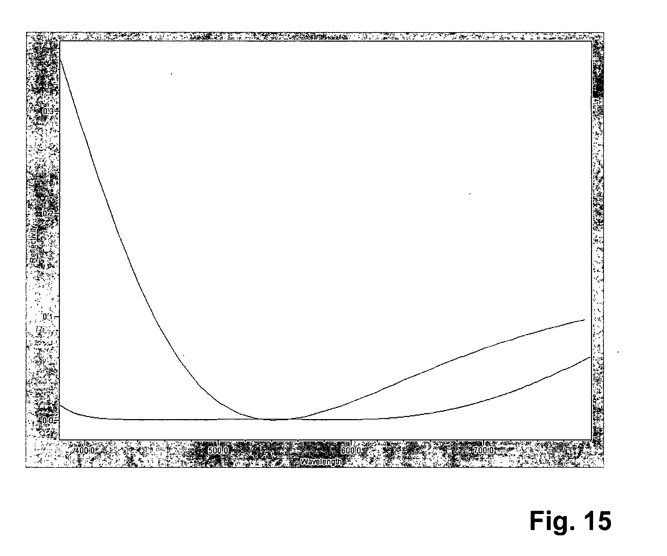

Das Reflexionsspektrum der Antireflexbeschichtung gemäß Figur 14 ist in **Figur 15** gezeigt. In Figur 15 ist der obere Graph das Reflexionsspektrum der Antireflexbeschichtung mit drei Schichten gemäß Figur 14 und der untere Graph das Reflexionsspektrum der Antireflexbeschichtung gemäß Figur 12 mit fünf Schichten. Die Figur zeigt, dass sich eine höhere Reflexion verglichen mit der Antireflexbeschichtung mit fünf Schichten ergibt.

Ein Vergleich der Reflexionsspektren der Ausführungsformen gemäß Tabellen 1 bis 3 mit den Reflexionsspektren der Ausführungsformen gemäß Figuren 12 und 14 mit dünnen $TiO_2$-Schichten zeigt, dass die Antireflexbeschichtungen mit vergleichsweise dicken oberen Titandioxidschichten (2) einerseits eine geringe Reflexion über einen engeren Wellenlängenbereich aufweisen und andererseits die Antireflexbeschichtungen mit dünnen oberen Titandioxidschichten eine geringfügig schlechtere Reflexion jedoch über einen breiteren Wellenlängenbereich aufweisen. Durch Variation der Dicke der oberen Titandioxidschicht (2) kann damit die Reflexion und der Wellenlängenbereich der Reflexion beeinflusst werden.

Die erfindungsgemäß eingesetzten Titandioxidschichten können grundsätzlich mit für die Herstellung von derartigen dünnen Schichten bekannten Beschichtungsverfahren erhalten werden. Als Beschichtungsverfahren können beispielsweise Vakuum-Beschichtungsverfahren dienen, wie das reaktive oder nichtreaktive Magnetron-Sputtern, oder thermisches oder elektronenstrahl-unterstütztes Aufdampfen. Auch das plasmaunterstützte Aufdampfen kann hierbei zum Einsatz kommen. Vorzugsweise erfolgt die Beschichtung derart, dass die bevorzugte Anatas-Modifikation resultiert. Für das reaktive Magnetron-Sputtern haben sich hierfür höhere Temperaturen zwischen 100 und 250 °C als hilfreich erwiesen.

Die Schichten der erfindungsgemäßen Antireflexbeschichtung können ganz allgemein mit Verfahren erhalten werden, wie sie für die Herstellung derartiger dünner Schichten an sich bekannt und beschrieben sind. Beispielsweise können die selben Verfahren eingesetzt werden wie vorstehend für die Herstellung der Titandioxidschicht beschrieben sind.

**Bezugszeichenliste**

1     Substrat
2     Obere Schicht aus $TiO_2$
3     Untere Schicht mit hohem Brechungsindex
4     Metallische Zwischenschicht
5     Blockerschicht

6     $TiO_2$ (Anatas)
7     niederbrechende Schicht
8     $TiO_2$ (Anatas)
9     niederbrechende Schicht
10    $TiO_2$ (Anatas)
11    niederbrechende Schicht

**Patentansprüche**

1.  Beschichtung mit selbstreinigender Wirkung,
    **dadurch gekennzeichnet,**
    **dass** die Beschichtung ein Schichtsystem aus mindestens drei Schichten aufweist,
    **dass** eine obere photokatalytisch aktive Schicht (2) aus Titandioxid vorgesehen ist, und
    **dass** das Schichtsystem antireflektierend ist.

2.  Beschichtung nach Anspruch 1,
    **dadurch gekennzeichnet,**
    **dass** die obere Schicht (2) Titandioxid in der Anatas-Modifikation ist.

3.  Beschichtung nach Anspruch 1 oder 2,
    **dadurch gekennzeichnet,**
    **dass** die Antireflexbeschichtung auf einem transparenten Substrat (1) vorgesehen ist.

4.  Beschichtung nach Anspruch 3,
    **dadurch gekennzeichnet,**
    **dass** das transparente Substrat (1) Glas ist.

5.  Beschichtung nach einem der vorhergehenden Ansprüche,
    **dadurch gekennzeichnet,**
    **dass** die Antireflexbeschichtung eine metallische Zwischenschicht (4) aufweist.

6.  Beschichtung nach Anspruch 5,
    **dadurch gekennzeichnet,**
    **dass** die metallische Zwischenschicht (4) aus einem Metall ausgewählt unter Silber, Platin, Nickel, Chrom, Kupfer, Aluminium, Niob und Titan oder Mischungen davon besteht.

7.  Beschichtung nach Anspruch 5 oder 6,
    **dadurch gekennzeichnet,**
    **dass** auf der metallischen Zwischenschicht (4) eine Blockerschicht (5) vorgesehen ist.

8.  Beschichtung nach einem der Ansprüche 5 bis 7,
    **dadurch gekennzeichnet,**
    **dass** das Schichtsystem zusätzlich eine untere Schicht aus einem Oxid mit einem Brechungsindex in einem Bereich von 1,8 bis 2,6 enthält.

**9.** Beschichtung nach einem der Ansprüche 1 bis 4,
**dadurch gekennzeichnet,**
**dass** das Schichtsystem dielektrische Schichten (6, 7, 8, 9, 10, 11) enthält.

**10.** Beschichtung nach Anspruch 9,
**dadurch gekennzeichnet,**
**dass** das Schichtsystem mindestens eine hochbrechende Schicht (6, 8, 10) und mindestens eine niederbrechende Schicht (7, 9, 11) enthält, wobei die hochbrechenden und niederbrechenden Schichten alternierend zueinander angeordnet sind.

**11.** Beschichtung nach Anspruch 9 oder 10,
**dadurch gekennzeichnet,**
**dass** die hochbrechende Schicht einen Brechungsindex von 2,2 oder größer 2,2 hat.

**12.** Beschichtung nach einem der Ansprüche 9 bis 11,
**dadurch gekennzeichnet,**
**dass** die niederbrechende Schicht einen Brechungsindex von 2 oder kleiner 2 hat.

**13.** Beschichtung nach einem der Ansprüche 9 bis 12,
**dadurch gekennzeichnet,**
**dass** die hochbrechende Schicht Titandioxid ist.

**14.** Beschichtung nach einem der Ansprüche 9 bis 13,
**dadurch gekennzeichnet,**
**dass** die niederbrechende Schicht ausgewählt ist unter $SiO_2$, $MgF_2$, $Al_2O_3$.

**15.** Beschichtung nach einem der Ansprüche 9 bis 14,
**dadurch gekennzeichnet,**
**dass** die obere Schicht (2) aus Titandioxid eine Schichtdicke von 20 nm oder weniger aufweist.

**16.** Substrat mit einer Beschichtung mit selbstreinigender Wirkung,
**dadurch gekennzeichnet,**
**dass** das Substrat mit einer Beschichtung nach einem der Ansprüche 1 bis 15 versehen ist.

**17.** Verwendung einer Beschichtung nach einem der Ansprüche 1 bis 15 zur Beschichtung eines transparenten Substrats (1).

**18.** Verwendung nach Anspruch 17,
**dadurch gekennzeichnet,**
**dass** das Substrat (1) eine Brille oder ein Architekturglas ist.

**19.** Verwendung einer Beschichtung nach einem der Ansprüche 1 bis 15 als Wärmeschutz.

**Fig. 1**

**Fig. 2**

**Fig. 3**

**Fig. 4**

**Fig. 5**

Luft

46.39 nm    2

5.00 nm    4

53.25 nm    3

1 mm    1

Luft

**Fig. 6**

**Fig. 7**

**Fig. 8**

**Fig. 9**

**Fig. 10**

**Fig. 11**

**Fig. 12**

| | | |
|---|---|---|
| | Luft | |
| 15.00 nm | 2 | |
| 42.78 nm | 9 | |
| 121.84 nm | 8 | |
| 33.08 nm | 7 | |
| 14.72 nm | 6 | |
| | 1 | |

**Fig. 13**

| | |
|---|---|
| Luft | |
| 15.00 nm | 2 |
| 68.00 nm | 11 |
| 26.00 nm | 10 |
| | 1 |

**Fig. 14**

Fig. 15